# EUROPEAN PATENT APPLICATION

(11) **EP 1 508 895 A1**
(43) Date of publication of application: **23.02.2005**
(21) Application number: 02728146.8
(22) Date of filing: 24.05.2002
(51) Int. Cl.: G11B 5/738, G11B 5/66, G11B 5/667, G11B 5/851, G11B 5/673

(54) **INFORMATION RECORDING MEDIUM AND INFORMATION STORAGE DEVICE**

(71) Applicant: FUJITSU LIMITED, Kawasaki-shi, Kanagawa 211-8588 (JP)
(72) Inventor: SHIMODA, Kazumasa, c/o Fujitsu Ltd, Kawasaki-shi, Kanagawa 211-8588 (JP); UZUMAKI, Takuya, c/o FUJITSU Ltd, Kawasaki-shi, Kanagawa 211-8588 (JP)
(74) Representative: Fenlon, Christine Lesley
(86) International application number: PCT/JP2002/005075
(87) International publication number: WO 2003/100773

(57) **Abstract**

Disclosed herein is a perpendicular magnetic recording medium including a substrate, a roughness control layer provided on the substrate and having a rough surface with a grain size of 5 to 20 nm and an average roughness (Ra) of 0.2 to 2.0 nm, and an orientation control layer provided on the roughness control layer and containing 30 at% or more of metal solely having an fcc structure. The perpendicular magnetic recording medium further includes a magnetic recording layer having perpendicular magnetic anisotropy provided on the orientation control layer in contact therewith. The magnetic recording layer is formed from a multilayer film composed of ferromagnetic thin films and nonmagnetic thin films alternately stacked.

## Description

### Technical Field

The present invention relates generally to an information recording medium, and more particularly to a perpendicular magnetic recording medium having a perpendicularly magnetized film.

### Background Art

With a reduction in size and an increase in capacity of a magnetic disk drive, it has recently been desired to reduce the grain size of magnetic particles in a recording medium. In a conventional recording method referred to as an in-plane (longitudinal) recording method, it is difficult to greatly reduce the grain size of magnetic particles because of thermal instability. Accordingly, a perpendicular magnetic recording method superior to the in-plane recording method in thermomagnetic relaxation or the like has recently been investigated. A general perpendicular magnetic recording method employs a dual-layer medium fabricated by forming a soft-magnetic backing layer (base layer) on a substrate and forming a perpendicularly magnetized film on the soft-magnetic backing layer with a nonmagnetic layer interposed therebetween.

In a perpendicular magnetic recording medium for a hard disk, the use of a multilayer film of Co/Pd or Co/Pt as the perpendicularly magnetized film is being investigated. This multilayer film is formed by alternately depositing very thin magnetic films each having a thickness of 0.05 to 2 nm and very thin nonmagnetic films each having a thickness of 0.1 to 5 nm. As compared with a conventional recording medium using Co-Cr based alloy, this multilayer film exhibits much stronger perpendicular magnetic anisotropy, and it is therefore a promising candidate for the perpendicularly magnetized film. However, the above-mentioned multilayer film has a problem of large medium noise due to a continuous film. The medium noise is caused mainly by transition noise or opposite magnetic domain noise accompanying magnetization reversal.

The transition noise originates from grain boundary noise by magnetic crystalline particles or nonuniformity of magnetization reversal near the boundary of a recorded magnetic domain. The opposite magnetic domain noise is due to nonuniformity of magnetic particles, demagnetizing fields in a recording film, or leakage magnetic fields from the periphery of a recorded magnetic domain. A general measure against this medium noise is to form a film structure so that adjacent magnetic particles are magnetically isolated from each other. By such magnetic isolation of the adjacent magnetic particles, the medium originated noise (medium noise) can be reduced to improve an S/N and accordingly improve a linear recording density.

The magnetic characteristics of the medium are largely changed by magnetically isolating the adjacent magnetic particles. That is, the coercive force is increased, and the slope α (= 4πPdM/dH) near the coercive force in an M-H loop is decreased (α = 1 in an ideal condition). As a technique for magnetically isolating the adjacent magnetic particles in the Co/Pd or Co/Pt multilayer magnetic film, a method of depositing films by sputtering under high pressures of gases or a method of using a granular base layer is known. However, even though these methods are used, it is not easy to form a single magnetic domain. Further, the control of magnetic characteristics by only one recording film is difficult.

### Disclosure of Invention

It is therefore an object of the present invention to provide a perpendicular magnetic recording medium which can increase a coercive force in a magnetic recording layer and reduce the medium noise to thereby improve the S/N.

In accordance with the present invention, there is provided an information recording medium including a substrate; a roughness control layer provided on the substrate, the roughness control layer having a rough surface with a grain size of 5 to 20 nm and an average roughness (Ra) of 0.2 to 2.0 nm; an orientation control layer provided on the roughness control layer, the orientation control layer containing 30 at% or more of metal solely having an fcc structure; and a magnetic recording layer having perpendicular magnetic anisotropy provided on the orientation control layer in contact therewith, the magnetic recording layer being formed from a multilayer film composed of ferromagnetic thin films and nonmagnetic thin films alternately stacked.

Preferably, the metal contained as a principal component in the orientation control layer is selected from the group consisting of Pd, Pt, Au, and Ag. Preferably, the roughness control layer is formed of silicon oxide or nitride.

The roughness control layer of silicon oxide is formed by sputtering in an atmosphere of process gases containing oxygen and inert gas. The roughness control layer of silicon nitride is formed by sputtering in an atmosphere of process gases containing nitrogen and inert gas.

Preferably, the magnetic recording layer is formed from a multilayer film of a material selected from the group consisting of Co/Pd, Co/Pt, and CoB/PdB. Each of the ferromagnetic thin films has a thickness of 0.05 to 2 nm, and each of the nonmagnetic thin films has a thickness of 0.1 to 5 nm.

### Brief Description of Drawings

FIG. 1 is a schematic sectional view showing the configuration of a medium according to a first preferred embodiment of the present invention;
FIG. 2 is a graph showing the dependence of a Kerr loop upon the thickness of Pd orientation control layer;
FIG. 3 is a graph showing the dependence of Hc upon the thickness of a Pd orientation control layer;
FIG. 4 is a schematic sectional view showing the configuration of a medium according to a second preferred embodiment of the present invention; and
FIG. 5 is a graph showing the dependence of S/Nm upon the thickness of a Pd orientation control layer.

### Best Mode for Carrying Out the Invention

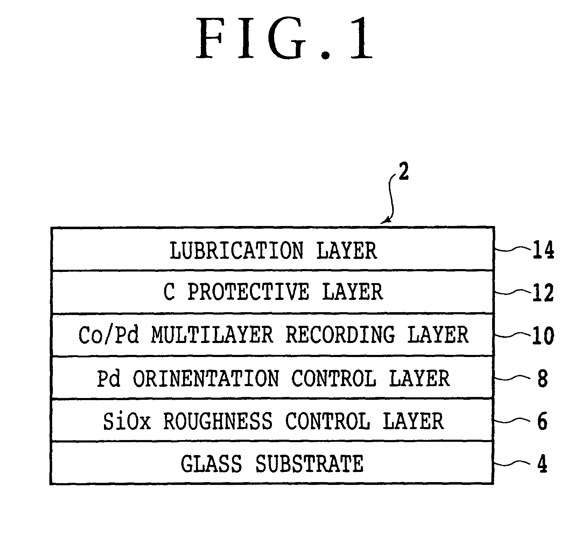

FIG. 1 shows the configuration of a perpendicular magnetic recording medium 2 according to a first preferred embodiment of the present invention. Film deposition of the medium 2 was performed by DC magnetron sputtering. An SiOx roughness control layer 6, Pd orientation control layer 8, Co/Pd multilayer recording layer 10, and C protective layer 12 were sequentially deposited on a glass substrate 4. Further, a lubrication layer 14 was formed by coating on the protective layer 12, so as to evaluate the recording and reproducing characteristics by a recording head.

The SiOx roughness control layer 6 was formed so as to have a thickness of 10 nm by reactive sputtering using two lines of gases of Ar and O₂ as process gases. The other inert gases such as Kr and Xe may be adopted as one of the process gases. The roughness control layer 6 has a rough surface having a grain size of 5 to 20 nm and an average roughness (Ra) of 0.2 to 2.0 nm. The Pd orientation control layer 8 was formed by DC magnetron sputtering in a cathode rotating type chamber. Three kinds of samples of the Pd orientation control layer 8 with different thicknesses of 2 nm, 5 nm, and 10 nm were prepared.

The Co/Pd multilayer recording layer 10 was formed by DC magnetron sputtering with alternate discharge to Co and Pd in a substrate rotating type sputter chamber. Totally 16 layers of Co and Pd were alternately stacked so that each Co layer has a thickness of 0.2 nm and each Pd layer has a thickness of 1 nm. Thus, the Co/Pd multilayer recording layer 10 having a thickness of 19.2 nm was obtained. Further, a comparative sample was prepared by forming the Co/Pd multilayer recording layer 10 directly on the SiOx roughness control layer 6.

While the magnetic recording layer 10 is formed from a Co/Pd multilayer film in this preferred embodiment, the magnetic recording layer 10 may be formed from a Co/Pt multilayer film or a CoB/PdB multilayer film. Further, the thickness of the Co or CoB ferromagnetic thin film of the multilayer recording layer 10 is preferably in the range of 0.05 to 2 nm, and the thickness of the Pd, Pt, or PdB nonmagnetic thin film of the multilayer recording layer 10 is preferably in the range of 0.1 to 5 nm.

The orientation control layer 8 may be formed of metal solely having an fcc structure, such as Pd, Pt, Au, and Ag, or alloy containing 30 at% or more of any one of these metals. As the elements of this alloy, Ti, Cr, and Ru, for example, may be adopted. While the roughness control layer 6 is formed of SiOx in this preferred embodiment, the roughness control layer 6 may be formed of SiNx. In this case, two lines of gases of Ar and N2 are used as the process gases, and this layer 6 is formed by reactive sputtering.

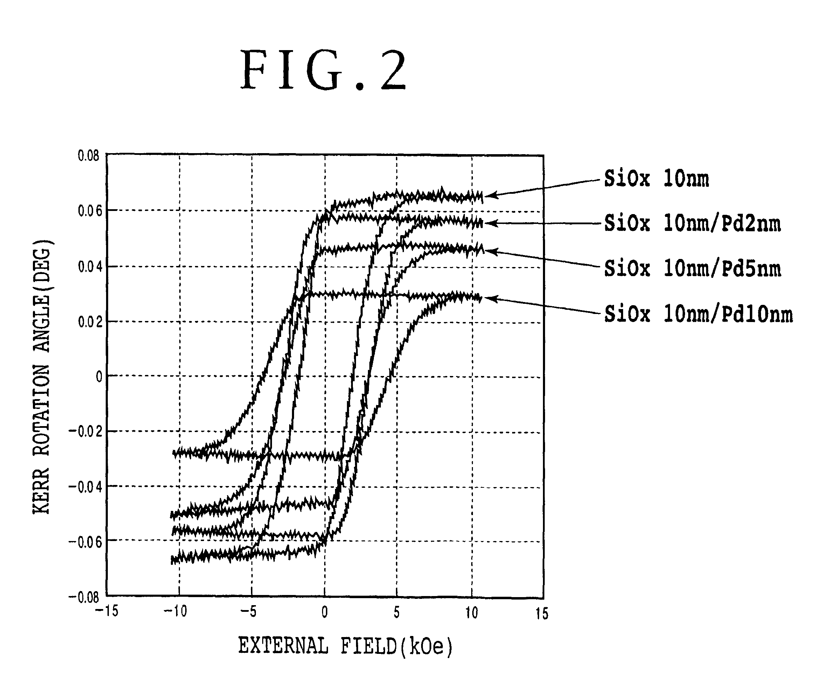

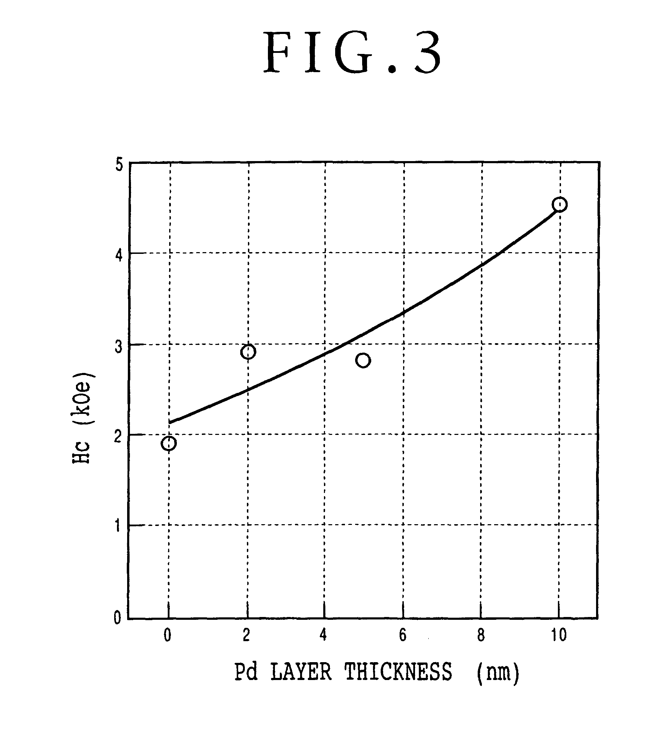

FIG. 2 shows Kerr loops of the samples of the Pd orientation control layer 8 as having different thicknesses of 2 nm, 5 nm, and 10 nm. As a comparison, the Pd orientation control layer 8 was omitted and the Co/Pd multilayer recording layer 10 was formed directly on the SiOx roughness control layer 6 to prepare a comparative sample. A Kerr loop of this comparative sample is also shown in FIG. 2. FIG. 3 shows the dependence of a coercive force (Hc) obtained from each Kerr loop upon the thickness of the Pd orientation control layer 8. The coercive force (Hc) corresponds to an external field at a Kerr rotation angle of 0 degree in FIG. 2. As apparent from FIG. 3, the coercive force (Hc) increases with an increase in thickness of the Pd orientation control layer 8. In the case that the thickness of the Pd orientation control layer 8 is 10 nm, the coercive force (Hc) can be increased twice or more that of the comparative sample excluding the Pd orientation control layer 8.

The formation of the SiOx roughness control layer 6 on the glass substrate 4 is effective for a reduction in medium noise. However, the insertion of the roughness control layer 6 causes the dispersion of crystal lattice matching, so that there is a possibility that the orientation of the Co/Pd or Co/Pt multilayer film may be degraded. The perpendicular magnetic anisotropy of the Co/Pd or Co/Pt multilayer film becomes maximum in the case of (111) orientation, and if crystal grains having other orientations are mixed, anisotropy dispersion occurs to cause the medium noise.

To solve this problem, the orientation control layer 8 is formed directly under the multilayer recording I layer 10 according to the present invention. The formation of the orientation control layer 8 directly under the multilayer recording layer 10 can improve the (111) orientation of the Co/Pd or Co/Pt multilayer film and reduce the intensity of other orientations. Accordingly, the perpendicular magnetic anisotropy can be improved and the coercive force (Hc) can be increased.

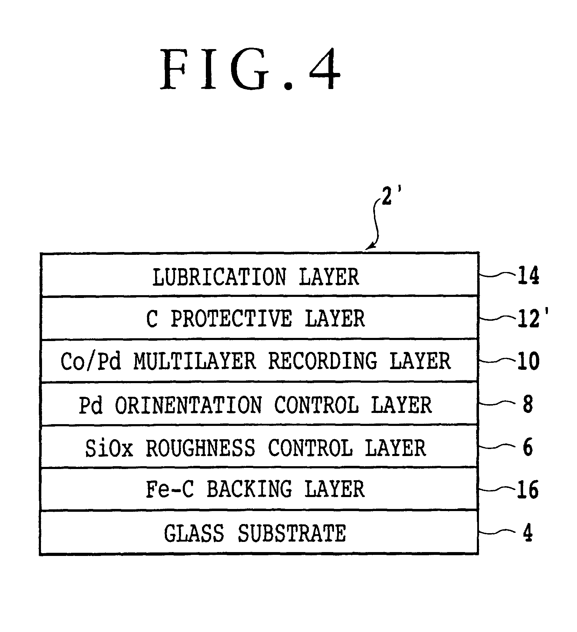

FIG. 4 shows the configuration of a perpendicular magnetic recording medium 2' according to a second preferred embodiment of the present invention. The same parts as those of the perpendicular magnetic recording medium 2 according to the first preferred embodiment are denoted by the same reference numerals, and the description thereof will be omitted herein to avoid the duplication. The perpendicular magnetic recording medium 2' has an Fe-C backing layer 16 formed on a glass substrate 4. The Fe-C backing layer 16 has a thickness of 400 nm. The Fe-C backing layer 16 was formed by cosputtering of Fe and C in a substrate rotating type sputter chamber. The thickness of a C protective layer 12' is 2 nm.

The other configuration of this preferred embodiment is similar to that of the first preferred embodiment shown in FIG. 1. A comparative sample was prepared by omitting the Pd orientation control layer 8 to form the Co/Pd multilayer recording layer 10 directly on the SiOx roughness control layer 6.

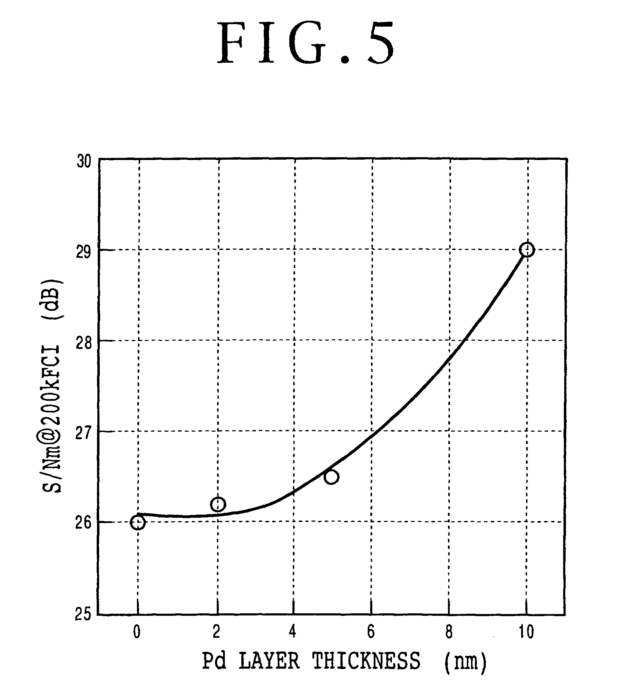

FIG. 5 shows changes in S/Nm (medium S/N) at a linear recording density of 200 kFCL according to changes in thickness of the Pd orientation control layer 8 as from 0 nm through 2 nm and 5 nm to 10 nm. As apparent from FIG. 5, S/Nm is improved by 3 dB in the case that the thickness of the Pd orientation control layer 8 is 10 nm over the comparative sample excluding the Pd orientation control layer 8.

### Industrial Applicability

According to the present invention as described above in detail, in addition to the roughness control layer, the orientation control layer is formed directly under the multilayer recording layer, thereby improving the (111) orientation of the multilayer recording layer and reducing the intensity of other orientations. As a result, the perpendicular magnetic anisotropy can be improved and the coercive force can be increased. Further, in the medium including the soft-magnetic backing layer formed on the substrate, S/Nm can be improved by forming the orientation control layer directly under the multilayer recording layer.

## Claims

1. An information recording medium comprising:
a substrate;
a roughness control layer provided on said substrate, said roughness control layer having a rough surface with a grain size of 5 to 20 nm and an average roughness (Ra) of 0.2 to 2.0 nm;
an orientation control layer provided on said roughness control layer, said orientation control layer containing 30 at% or more of metal solely having an fcc structure; and
a magnetic recording layer having perpendicular magnetic anisotropy provided on said orientation control layer in contact therewith, said magnetic recording layer being formed from a multilayer film composed of ferromagnetic thin films and nonmagnetic thin films alternately stacked.

2. An information recording medium according to claim 1, wherein said metal contained as a principal component in said orientation control layer is selected from the group consisting of Pd, Pt, Au, and Ag.

3. An information recording medium according to claim 1, wherein said roughness control layer is formed of silicon oxide or nitride.

4. An information recording medium according to claim 1, further comprising a soft-magnetic backing layer interposed between said substrate and said roughness control layer.

5. An information recording medium according to claim 3, wherein said roughness control layer of silicon oxide is formed by sputtering in an atmosphere of process gases containing oxygen and inert gas.

6. An information recording medium according to claim 3, wherein said roughness control layer of silicon nitride is formed by sputtering in an atmosphere of process gases containing nitrogen and inert gas.

7. An information recording medium according to claim 1, wherein said magnetic recording layer is formed from a multilayer film of a material selected from the group consisting of Co/Pd, Co/Pt, and CoB/PdB.

8. An information recording medium according to claim 1, wherein each of said ferromagnetic thin films has a thickness of 0.05 to 2 nm, and each of said nonmagnetic thin films has a thickness of 0.1 to 5 nm.

9. An information storing device having an information recording medium according to any one of claims 1 to 8.
